# EUROPÄISCHE PATENTANMELDUNG

(11) **EP 3 628 196 A1**
(43) Veröffentlichungstag der Anmeldung: **01.04.2020**
(21) Anmeldenummer: 19200356.4
(22) Anmeldetag: 30.09.2019
(51) Int. Cl.: A47J 31/54

(54) **DURCHLAUFERHITZER**

(30) Priorität: 28.09.2018 DE 102018216733
(71) Anmelder: Robert Bosch GmbH, 70442 Stuttgart (DE)
(72) Erfinder: Loser, Florian, 83022 Rosenheim (DE); Englisch, Christian, 83324 Ruhpolding (DE); Mayer, Gebhard, 83278 Traunstein (DE)

(57) **Zusammenfassung**

Die Erfindung geht aus von einem Durchlauferhitzer, insbesondere Haushaltsgerätedurchlauferhitzer, mit zumindest einer Leistungsplatine zur Regelung und Bereitstellung einer Heizleistung und mit zumindest einer Heizeinheit zum Erhitzen eines, den Durchlauferhitzer durchlaufenden, Mediums.

Es wird vorgeschlagen, dass der Durchlauferhitzer zumindest eine Steckverbindungseinheit aufweist, die dazu vorgesehen ist, die Leistungsplatine mit der Heizeinheit elektrisch leitend zu verbinden.

## Beschreibung

### Stand der Technik

Es ist bereits ein Durchlauferhitzer, insbesondere ein Haushaltsgerätedurchlauferhitzer, vorgeschlagen worden, der zumindest eine Leistungsplatine zur Regelung und Bereitstellung einer Heizleistung und zumindest eine Heizeinheit zum Erhitzen eines den Durchlauferhitzer durchlaufenden Mediums umfasst.

### Offenbarung der Erfindung

Die Erfindung geht aus von einem Durchlauferhitzer, insbesondere von einem Haushaltsgerätedurchlauferhitzer, mit zumindest einer Leistungsplatine zur Regelung und Bereitstellung einer Heizleistung und mit zumindest einer Heizeinheit zum Erhitzen eines, den Durchlauferhitzer durchlaufenden Mediums.

Es wird vorgeschlagen, dass der Durchlauferhitzer zumindest eine Steckverbindungseinheit aufweist, die dazu vorgesehen ist, die Leistungsplatine mit der Heizeinheit elektrisch leitend zu verbinden.

Insbesondere ist der Durchlauferhitzer dazu vorgesehen, ein den Durchlauferhitzer durchlaufendes Medium mittels der Heizeinheit zu erhitzen. Insbesondere ist der Durchlauferhitzer, insbesondere der Haushaltsgerätedurchlauferhitzer, zur Verwendung in einem Haushalts- und/oder Warmwassergerät, insbesondere einer Kaffeemaschine, einer Waschmaschine, einer Spülmaschine, einem Heißkessel und /oder einem Showerheater, vorgesehen. Unter einer "Leistungsplatine" soll insbesondere eine Platine verstanden werden, die zumindest eine Steuerelektronik und eine Leistungselektronik umfasst, welche zu einer Umwandlung einer Netz- oder Akkuspannung in eine Heizleistung sowie deren Regelung vorgesehen ist. Die Leistungsplatine ist insbesondere dazu vorgesehen, über zumindest eine Verbindung aus zumindest einer externen Quelle, insbesondere zumindest einem elektrischen Anschluss und/oder einem Akku, eine Spannung zu entnehmen und in eine Heizleistung umzuwandeln, welche insbesondere über die Heizeinheit zu einem Erhitzen des Mediums verwendet werden kann. Es ist jedoch auch denkbar, dass der Durchlauferhitzer, insbesondere auf einer weiteren Platine, eine Steuerelektronik zur Steuerung und/oder Regelung der Heizleistung, insbesondere der Leistungselektronik der Leistungsplatine aufweist, welche getrennt von der Leistungsplatine ausgebildet ist, wobei insbesondere die Leistungsplatine lediglich zu einer Umwandlung und/oder Aufbereitung der Heizleistung vorgesehen ist.

Insbesondere weist die Leistungsplatine zumindest eine Aussparung auf, die zu einer zumindest teilweisen Aufnahme der Steckverbindungseinheit und/oder zu einer Verbindung mit der Steckverbindungseinheit vorgesehen ist. Bevorzugt weist die Leistungsplatine an zumindest einem die Aussparung begrenzenden Randbereich der Leistungsplatine zumindest eine Kontaktfläche auf, die dazu vorgesehen ist, die Steckverbindungseinheit zumindest teilweise elektrisch zu kontaktieren, insbesondere um eine Heizleistung an die Steckverbindungseinheit zu übertragen. Unter einer "Steckverbindungseinheit" soll insbesondere eine Einheit verstanden werden, welche zumindest zwei Bauteile über ein Zusammenstecken von Verbindungselementen miteinander, insbesondere elektrisch leitend, verbindet und/oder aneinander befestigt. Insbesondere verbindet die Steckverbindungseinheit die Leistungsplatine mit der Heizeinheit. Vorzugsweise weist der Durchlauferhitzer zumindest mehr als eine Steckverbindungseinheit auf, um die Leistungsplatine, insbesondere sicher, mit der Heizeinheit, insbesondere elektrisch leitend, zu verbinden. Die Heizeinheit ist insbesondere dazu vorgesehen, die von der Leistungsplatine über die Steckverbindungseinheit übertragene Heizleistung in Wärme umzuwandeln, insbesondere um dadurch das Medium zu erhitzen. Insbesondere umfasst die Heizeinheit zumindest eine Heizwendel, welche insbesondere einen von einem Medium durchlaufenden Mediumleitkanal zumindest teilweise umgibt, um das Medium zu erhitzen. Bevorzugt ist der Mediumleitkanal zusammen mit dem Durchlauferhitzer ausgebildet und über zumindest einen Zu- und Ausgang mit zumindest einem externen Zu- und Abfluss des Mediums verbunden. Es ist jedoch auch denkbar, dass der Durchlauferhitzer getrennt von dem Mediumleitkanal ausgebildet ist und, insbesondere die Heizeinheit, zu einer Verwendung um den Mediumleitkanal angeordnet wird. Insbesondere weist der Durchlauferhitzer zumindest mehr als einen Mediumleitkanal auf, um die auf das Medium zu übertragende Heizleistung zu vergrößern. Vorzugsweise ist der Mediumleitkanal als ein, insbesondere gerades, gebogenes, mehrfach gebogenes und/oder Helix-förmiges, Rohr ausgebildet, welches zumindest größtenteils in zumindest einem Zwischenraum der Heizeinheit, insbesondere zwischen der Heizwendel der Heizeinheit, angeordnet ist. Unter "vorgesehen" soll insbesondere speziell programmiert, speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "zumindest im Wesentlichen" soll insbesondere verstanden werden, dass eine Abweichung von einem vorgegebenen Wert insbesondere weniger als 25 %, vorzugsweise weniger als 10 % und besonders bevorzugt weniger als 5 % beträgt.

Vorteilhafterweise weißt der Durchlauferhitzer zumindest eine Sensoreinheit auf, welche dazu vorgesehen ist, eine Kenngröße, insbesondere eine Temperatur und/oder einen Volumenstrom, eines den Durchlauferhitzer durchlaufenden Mediums zu erfassen. Insbesondere erfolgt eine Regelung der Heizleistung mittels der Leistungsplatine in Abhängigkeit von der mittels der Sensoreinheit gemessenen Kenngröße, insbesondere einer Temperatur und/oder eines Volumenstroms. Bevorzugt weist die Sensoreinheit des Durchlauferhitzers zumindest mehr als ein Sensorelement auf, welche im Mediumleitkanal des Durchlauferhitzers, insbesondere in Durchlaufrichtung zumindest jeweils vor und nach der Heizeinheit angeordnet sind. Insbesondere ist die Sensoreinheit mit der Leistungsplatine, insbesondere mit der Steuerelektronik der Leistungsplatine, kabelgebunden und/oder kabellos verbunden.

Durch die erfindungsgemäße Ausgestaltung des Durchlauferhitzers kann eine vorteilhaft fehlerfreie und kurze Montage bei gleichzeitig unveränderter Stabilität und Haltbarkeit realisiert werden. Außerdem kann ein Durchlauferhitzer mit einer vorteilhaft hohen Modularität, insbesondere auch Kompatibilität mit externen ähnlichen Geräten, insbesondere bei einer Reparatur und/oder Wartung, erreicht werden. Außerdem kann weiter eine vorteilhaft einfache Montage und/oder Wartung des Durchlauferhitzers ermöglicht werden.

Des Weiteren wird vorgeschlagen, dass die Steckverbindungseinheit zumindest ein Bolzenelement und zumindest ein Klemmelement umfasst, welche dazu vorgesehen sind, zu einer Verbindung der Leistungsplatine mit der Heizeinheit über die Steckverbindungseinheit zumindest im Wesentlichen ineinanderzugreifen. Unter "zumindest im Wesentlichen ineinandergreifen" soll insbesondere verstanden werden, dass zwei Bauteile derart verbunden werden, dass zumindest jeweils eine Kontaktfläche der beiden Bauteile derart aufeinander einwirken, insbesondere durch eine Reibungs- und/oder Spannkraft, dass diese Kraft einem Auseinanderbewegen der beiden Bauteile entgegenwirkt, wobei die Kontaktflächen so angeordnet sind, dass ihr Normalenvektor sich zumindest in einem unbelasteten Zustand der beiden Bauteile von einer Richtung einer Verbindungsbewegung unterscheidet. Insbesondere greifen das Bolzenelement und das Klemmelement bei einer Verbindung der Leistungsplatine mit der Heizeinheit so ineinander, dass zumindest jeweils eine Kontaktfläche des Bolzenelements und des Klemmelements derart aufeinander einwirken, insbesondere durch eine Reibungs- und/oder Spannkraft, dass diese Kraft einem Auseinanderbewegen der beiden Elemente entgegenwirkt, wobei die Kontaktflächen so angeordnet sind, dass ihr Normalenvektor sich zumindest in einem unbelasteten Zustand der Steckverbindungseinheit von einer axialen Richtung der Steckverbindungseinheit unterscheidet. Insbesondere ist das Bolzenelement zumindest im Wesentlichen rotationssymmetrisch zu einer Mittelachse des Bolzenelements ausgebildet. Insbesondere ist das Klemmelement zumindest im Wesentlichen rotationssymmetrisch zu einer Mittelachse des Klemmelements ausgebildet. Bevorzugt ist ein Ineinandergreifen des Bolzenelements und des Klemmelements unabhängig von einer Drehlage des Bolzenelements um die Mittelachse des Bolzenelements und von einer Drehlage des Klemmelements um die Mittelachse des Klemmelements. Durch die erfindungsgemäße Ausgestaltung des Durchlauferhitzers kann eine vorteilhaft einfache Verbindung der Bauteile erreicht werden. Außerdem kann eine vorteilhaft hohe Kompaktheit des Durchlauferhitzers erreicht werden.

Ferner wird vorgeschlagen, dass die Steckverbindungseinheit zumindest ein Bolzenelement und zumindest ein Klemmelement umfasst, wobei das Klemmelement der Steckverbindungseinheit zumindest größtenteils an einer Unterseite der Leistungsplatine angeordnet ist. Insbesondere ist die Unterseite der Leistungsplatine einer Seite der Leistungsplatine abgewandt, auf der zumindest ein Großteil der auf der Leistungsplatine ausgebildeten Bauteile einer Elektronik angeordnet sind. Insbesondere ist die Unterseite umseitig zu einer Seite der Leistungsplatine angeordnet, auf der zumindest ein Großteil der auf der Leistungsplatine ausgebildeten Bauteile einer Elektronik angeordnet ist. Insbesondere ist die Unterseite die Seite der Leistungsplatine, auf der zumindest ein Großteil der auf der Leistungsplatine ausgebildeten Bauteile einer Elektronik beispielsweise durch Lötverbindungen befestigt ist. Insbesondere ist das Klemmelement von der Unterseite an der Leistungsplatine befestigt. Bevorzugt weist die Leistungsplatine zumindest an der Unterseite die zumindest eine Aussparung, insbesondere mit zumindest einer Kontaktfläche, auf, um das Klemmelement mit der Leistungsplatine zu verbinden. Durch die erfindungsgemäße Ausgestaltung des Durchlauferhitzers kann eine vorteilhaft einfache Montage des Durchlauferhitzers erreicht werden, insbesondere da keine störenden Bauteile den Zugang zur Steckverbindungseinheit blockieren. Außerdem kann dadurch ein Durchlauferhitzer mit einer vorteilhaft erhöhten Sicherheit, insbesondere im Bezug zu Kurzschlüssen, erreicht werden.

Zudem wird vorgeschlagen, dass die Steckverbindungseinheit zumindest ein Bolzenelement und zumindest ein Klemmelement umfasst, wobei das Bolzenelement zumindest teilweise einstückig mit der Heizeinheit ausgebildet ist. Unter "zumindest teilweise einstückig" soll in diesem Zusammenhang insbesondere verstanden werden, dass zumindest ein Bauteil zumindest eines Objekts und/oder zumindest ein erstes Objekt einstückig mit zumindest einem Bauteil zumindest eines weiteren Objekts und/oder einstückig mit zumindest einem weiteren Objekt ausgebildet ist. Insbesondere ist zumindest ein Teil des Bolzenelements einstückig mit zumindest einem Teil der Heizeinheit ausgebildet. Insbesondere sind das Bolzenelement und die Heizeinheit, insbesondere zumindest teilweise, aus demselben Material ausgebildet. Bevorzugt sind das Bolzenelement und die Heizeinheit zumindest im Wesentlichen vollständig aus einem elektrisch leitenden, insbesondere metallischen, Material ausgebildet. Durch die erfindungsgemäße Ausgestaltung des Durchlauferhitzers kann ein Durchlauferhitzer mit einer vorteilhaft erhöhten Stabilität und Sicherheit erreicht werden, insbesondere da das mit Leistung beaufschlagte Bolzenelement verliersicher an der Heizeinheit angebracht ist.

Des Weiteren wird vorgeschlagen, dass die Steckverbindungseinheit zumindest ein Bolzenelement und zumindest ein Klemmelement umfasst, wobei das Bolzenelement an einem Ende zumindest einen Klemmbereich aufweist, der dazu vorgesehen ist, bei einem Ineinandergreifen des Bolzenelements in das Klemmelement, das Bolzenelement und das Klemmelement miteinander zu verklemmen. Insbesondere ist das Ende des Bolzenelements, welches den Klemmbereich aufweist, einem weiteren Ende des Bolzens abgewandt, mittels dessen das Bolzenelement an der Heizeinheit angeordnet ist, insbesondere einteilig mit der Heizeinheit ausgebildet ist. Insbesondere weist der Klemmbereich des Bolzenelements im Vergleich zu einem radialen Durchmesser des Bolzenelements außerhalb des Klemmbereichs zumindest einen größeren radialen Durchmesser auf. Insbesondere ist der Klemmbereich über höchstens 50 %, vorzugsweise höchstens 25 % und besonders bevorzugt höchstens 10 % einer axialen Gesamtlänge des Bolzenelements ausgebildet. Bevorzugt weist der Klemmbereich zumindest eine Kontaktfläche auf, welche für die Verbindung zwischen dem Bolzenelement und dem Klemmelement mit einer Kraft beaufschlagt wird. Durch die erfindungsgemäße Ausgestaltung des Durchlauferhitzers kann ein Durchlauferhitzer mit einer vorteilhaft erhöhten Stabilität und Sicherheit erreicht werden, insbesondere da mit einem Klemmbereich die Festigkeit der Steckverbindungseinheit vorteilhaft hoch ist. Außerdem kann durch die erfindungsgemäße Ausgestaltung des Durchlauferhitzers eine vorteilhaft sichere und stabile Leistungsübertragung zwischen Leistungsplatine und Heizeinheit über die Steckverbindungseinheit gewährleistet werden.

Ferner wird vorgeschlagen, dass die Steckverbindungseinheit zumindest ein Bolzenelement und zumindest ein Klemmelement umfasst, wobei in einem vormontierten Zustand der Steckverbindungseinheit das Bolzenelement und das Klemmelement getrennt angeordnet sind und in einem montierten Zustand der Steckverbindungseinheit das Bolzenelement und das Klemmelement ineinandergreifend verbunden sind und zusammen zumindest teilweise auf der Leistungsplatine angeordnet sind. Unter einem "vormontierten Zustand" soll insbesondere ein Zustand der Steckverbindungseinheit verstanden werden, in dem das Bolzenelement und das Klemmelement getrennt angeordnet, insbesondere relativ voneinander beabstandet angeordnet sind, vorzugsweise kontaktfrei, sind, insbesondere vor einer Montage und/oder einem Zusammenbau der Leistungsplatine und der Heizeinheit des Durchlauferhitzers. Unter einem "montierten Zustand" soll insbesondere ein Zustand der Steckverbindungseinheit verstanden werden, in dem das Bolzenelement und das Klemmelement ineinandergreifend als eine Einheit angeordnet sind, um die Leistungsplatine und die Heizeinheit des Durchlauferhitzers zu verbinden. Insbesondere ist ein Übergang von einem vormontierten Zustand in einen montierten Zustand der Steckverbindungseinheit ein reversibler Vorgang, vorteilhafterweise mit einer schadenfreien Erhaltung des Bolzenelements und/oder des Klemmelements. Bevorzugt ist ein Übergang von einem vormontierten Zustand in einen montierten Zustand und/oder ein Übergang von einem montierten Zustand in einen vormontierten Zustand der Steckverbindungseinheit unabhängig von einem Vorhandensein eines Werkzeugs möglich. Durch die erfindungsgemäße Ausgestaltung des Durchlauferhitzers kann ein Durchlauferhitzer mit einer vorteilhaft fehlerfreien und kurzen Montage ermöglicht werden. Außerdem kann eine vorteilhaft einfache Montage und/oder Wartung des Durchlauferhitzers erreicht werden.

Zudem wird vorgeschlagen, dass die Steckverbindungseinheit zumindest ein Bolzenelement und zumindest ein Klemmelement umfasst, wobei in einem vormontierten Zustand der Steckverbindungseinheit das Klemmelement zumindest spielbehaftet mit der Leistungsplatine verbunden ist. Unter "zumindest spielbehaftet verbunden" soll insbesondere eine aus zwei Elementen ausgebildete Verbindung verstanden werden, wobei bei einer Beaufschlagung der verbundenen Elemente durch eine Kraft höchstens eine Bewegung der Elemente zueinander von einer vorgegebenen Distanz bzw. eines Neigungswinkels, insbesondere höchstens 2 cm bzw. 30°, vorzugsweise weniger als 1 cm bzw. 20° und besonders bevorzugt weniger als 0,5 cm bzw. 10°, ermöglicht ist, ohne die Bauteile zu beschädigen oder zu trennen. Insbesondere ist das Klemmelement in einem vormontierten Zustand der Steckverbindungseinheit über eine zumindest spielbehaftete Verbindung an der Leistungsplatine zumindest im Wesentlichen fixiert. Insbesondere rastet das Klemmelement beim Verbinden mit der Leistungsplatine für eine zumindest spielbehaftete Verbindung in die Aussparung der Leistungsplatine ein. Insbesondere ist die Verbindung des Klemmelements mit der Leistungsplatine zumindest bezüglich einer Neigung gegen die Mittelachse des Klemmelements zumindest spielbehaftet ausgebildet. Insbesondere ist denkbar, dass die Verbindung des Klemmelements mit der Leistungsplatine in zumindest eine Richtung als zumindest im Wesentlichen spielfreie Verbindung ausgebildet ist. Insbesondere ist die Verbindung des Klemmelements mit der Leistungsplatine in eine axiale Richtung, senkrecht zu einer Haupterstreckungsebene der Leistungsplatine, zumindest im Wesentlichen spielfrei ausgebildet. Unter einer "zumindest im Wesentlichen spielfreien Verbindung" soll insbesondere eine aus zwei Elementen ausgebildete Verbindung werden, wobei bei einer Beaufschlagung der Elemente durch eine Kraft höchstens eine Bewegung der Elemente zueinander von einer vorgegebenen Distanz bzw. eines Neigungswinkels, insbesondere weniger als 1 mm bzw. 3°, vorzugsweise weniger als 0,5 mm bzw. 2° und besonders bevorzugt weniger als 0,1 mm bzw. 1°, ermöglicht ist. Durch die erfindungsgemäße Ausgestaltung des Durchlauferhitzers kann ein Durchlauferhitzer mit einer vorteilhaft fehlerfreien und kurzen Montage ermöglicht werden, insbesondere da eine Bestückung der Leistungsplatine mit Klemmelementen getrennt von einer endgültigen Montage des Durchlauferhitzers erfolgen kann.

Des Weiteren wird vorgeschlagen, dass die Steckverbindungseinheit zumindest ein Bolzenelement und zumindest ein Klemmelement umfasst, wobei das Klemmelement zumindest eine Öffnung aufweist, wobei die Öffnung derart ausgebildet ist, dass eine Krafteinwirkung eines Benutzers und/oder einer externen Einheit durch die Öffnung in einem vormontierten und/oder montierten Zustand der Steckverbindungseinheit ein Lösen des Klemmelements von der Leistungsplatine und/oder aus einem montierten Zustand der Steckverbindungseinheit heraus ein Lösen des Bolzenelements und des Klemmelements voneinander ermöglicht. Insbesondere ist die Öffnung derart ausgebildet, dass ein Benutzer unabhängig von einem Vorhandensein einer externen Einheit, insbesondere eines Werkzeugs, mittels einer Krafteinwirkung durch die Öffnung das Klemmelement im vormontierten und/oder montierten Zustand der Steckverbindungseinheit von der Leistungsplatine lösen und/oder das Bolzenelement und das Klemmelement bei einem Trennen der Steckverbindungseinheit aus dem montierten Zustand der Steckverbindungseinheit voneinander lösen kann. Vorteilhafterweise ist die Öffnung des Klemmelements in einem Bereich des Klemmelements ausgebildet, der im montierten Zustand der Steckverbindungseinheit zumindest außerhalb der Leistungsplatine angeordnet ist. Bevorzugt weist die Leistungsplatine zumindest ein Schalter- und/oder Hebelelement auf, welches zumindest in einer Umgebung der Aussparung der Leistungsplatine angeordnet ist. Insbesondere ist das Schalter- und/oder Hebelelement dazu vorgesehen, mittels zumindest einer Krafteinwirkung eines Benutzers das Klemmelement im vormontierten und/oder montierten Zustand der Steckverbindungseinheit von der Leistungsplatine zu lösen und/oder das Bolzenelement und das Klemmelement bei einem Trennen der Steckverbindungseinheit aus dem montierten Zustand der Steckverbindungseinheit voneinander zu lösen. Insbesondere beaufschlagt das Schalter- und/oder Hebelelement der Leistungsplatine das Klemmelement bei einem Betätigen des Schalter- und/oder Hebelelements mit einer Kraft, insbesondere um das Klemmelement in einem vormontierten und/oder montierten Zustand der Steckverbindungseinheit von der Leistungsplatine zu lösen und/oder um das Bolzenelement und das Klemmelement bei einem Trennen der Steckverbindungseinheit aus dem montierten Zustand der Steckverbindungseinheit voneinander zu lösen. Insbesondere sind das Schalter- und/oder Hebelelement und das Klemmelement zumindest in einem montierten Zustand der Steckverbindungseinheit kraft- und/oder formschlüssig miteinander verbunden. Es ist jedoch auch denkbar, dass das Schalter- und/oder Hebelelement, insbesondere in einem vormontierten und/oder montierten Zustand der Steckverbindungseinheit, getrennt von der Leistungsplatine angeordnet und insbesondere zumindest teilweise einstückig mit dem Klemmelement ausgebildet ist. Insbesondere ist das Schalter- und/oder Hebelelement am Klemmelement zumindest teilweise in einem Bereich der Öffnung angeordnet. Vorteilhafterweise ist das Schalter- und/oder Hebelelement funktional mit der Öffnung des Klemmelements gekoppelt, insbesondere in dem das Schalter- und/oder Hebelelement in einem vormontierten und/oder montierten Zustand die Öffnung des Klemmelements zumindest teilweise durchdringt und/oder zumindest teilweise auf zumindest einen Randbereich der Öffnung am Klemmelement einwirkt. Durch die erfindungsgemäße Ausgestaltung des Durchlauferhitzers kann ein Durchlauferhitzer mit einer vorteilhaft fehlerfreien und kurzen Montage ermöglicht werden. Außerdem kann eine vorteilhaft einfache Montage und/oder Wartung des Durchlauferhitzers erreicht werden.

Ferner wird vorgeschlagen, dass die Steckverbindungseinheit zumindest ein Bolzenelement und zumindest ein Klemmelement umfasst, wobei das Bolzenelement zumindest einen Auflagebereich aufweist, der teller- oder scheibenförmig ausgebildet ist. Vorteilhafterweise liegt der Auflagebereich bei einem Ineinandergreifen des Bolzenelements und des Klemmelements, zumindest teilweise auf dem Klemmelement und/oder der Leistungsplatine auf, insbesondere auf einer Fläche, welche zumindest im Wesentlichen senkrecht zur Mittelachse des Bolzenelements ausgerichtet ist. Insbesondere ist der Auflagebereich über höchstens 50 %, vorzugsweise höchstens 25 % und besonders bevorzugt höchstens 10 % der axialen Gesamtlänge des Bolzenelements ausgebildet. Vorteilhafterweise ist der Auflagebereich aus demselben Material ausgebildet wie das restliche Bolzenelement. Es ist jedoch auch denkbar, dass der Auflagebereich zumindest teilweise aus einem anderen Material ausgebildet wie das restliche Bolzenelement. Bevorzugt weist der Auflagebereich im Vergleich zu weiteren Bereichen des Bolzenelements, die außerhalb des Auflagebereichs am Bolzenelement angeordnet sind, einen größeren radialen Durchmesser auf. Insbesondere weist das Klemmelement eine zum Auflagebereich korrespondierend ausgebildete Anlagefläche auf. Insbesondere sind das Bolzenelement und das Klemmelement bei einem Übergang in einen montierten Zustand der Steckverbindungseinheit über den Auflagebereich des Bolzenelements und die Anlagefläche des Klemmelements kraft- und/oder formschlüssig miteinander verbunden. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Vorteilhafterweise ist die zumindest eine Öffnung des Klemmelements in einem Bereich der Anlagefläche ausgebildet. Bevorzugt ist der Auflagebereich des Bolzenelements dazu vorgesehen, beim Trennen der Steckverbindungseinheit aus einem montierten Zustand mittels einer Beaufschlagung einer Kraft durch einen Benutzer und/oder eine externe Einheit auf den Auflagebereich, insbesondere durch die Öffnung des Klemmelements, das Bolzenelement und das Klemmelement voneinander zu lösen. Durch die erfindungsgemäße Ausgestaltung des Durchlauferhitzers kann ein Durchlauferhitzer mit einer vorteilhaft erhöhten Stabilität und Sicherheit erreicht werden, insbesondere da mit einem Auflagebereich die Stabilität der Steckverbindungseinheit vorteilhaft hoch ist. Außerdem kann ein Durchlauferhitzer mit einer vorteilhaft geringen Anzahl an Steckverbindungseinheiten ermöglicht werden, welche für eine sichere Verbindung der Leistungsplatine mit der Heizeinheit erforderlich sind. Insbesondere können durch die erfindungsgemäße Ausgestaltung des Durchlauferhitzers auch vorteilhaft geringe Kosten erreicht werden. Außerdem kann eine vorteilhaft einfache Montage und/oder Wartung des Durchlauferhitzers erreicht werden.

Des Weiteren wird vorgeschlagen, dass die Steckverbindungseinheit zumindest ein Bolzenelement und zumindest ein Klemmelement umfasst, wobei das Klemmelement das Bolzenelement in einem montierten Zustand der Steckverbindungseinheit zumindest größtenteils umschließt. Bevorzugt wird das Bolzenelement bei einem Übergang der Steckverbindungseinheit in einen montierten Zustand zumindest größtenteils in das Klemmelement hineinbewegt. Vorzugsweise wird das Bolzenelement, insbesondere im Anlagenbereich und/oder im Klemmbereich, zu einem Großteil von dem Klemmelement entlang einer Umfangsrichtung umgeben. Unter "einem Großteil" soll insbesondere ein Anteil von zumindest mehr als 50 %, vorzugsweise zumindest mehr als 75 % und besonders bevorzugt zumindest mehr als 90 % von einer maximalen Gesamtmasse und/oder einer maximalen Gesamterstreckung eines Bauteils verstanden werden. Die Umfangsrichtung verläuft bevorzugt in einer sich zumindest im Wesentlichen senkrecht zur Mittelachse des Bolzenelements verlaufenden Ebene. Insbesondere ist das Bolzenelement in einem montierten Zustand zumindest größtenteils im Klemmelement angeordnet. Bevorzugt ist das Bolzenelement in einem montierten Zustand zumindest zur Hälfte im Klemmelement angeordnet. Besonders bevorzugt ist das Bolzenelement in einem montierten Zustand mit zumindest 75 % seiner maximalen axialen Länge im Klemmelement angeordnet. Durch die erfindungsgemäße Ausgestaltung des Durchlauferhitzers kann ein Durchlauferhitzer mit einer vorteilhaft erhöhten Kompaktheit erreicht werden, da die Steckverbindungseinheit zumindest größtenteils in der Leistungsplatine angeordnet werden kann. Außerdem kann dadurch ein Durchlauferhitzer mit einer vorteilhaft erhöhten Stabilität und Sicherheit ermöglicht werden.

Ferner wird vorgeschlagen, dass die Steckverbindungseinheit zumindest ein Bolzenelement und zumindest ein Klemmelement umfasst wobei das Klemmelement zumindest teilweise als Kontaktfederelement ausgebildet ist, welches in einem vormontierten Zustand der Steckverbindungseinheit zumindest spielbehaftet mit der Leistungsplatine verbunden ist. Insbesondere ist das zumindest teilweise als Kontaktfederelement ausgebildete Klemmelement dazu vorgesehen, in einem montierten Zustand der Steckverbindungseinheit die Steckverbindungseinheit mit der Leistungsplatine zumindest teilweise elektrisch leitend zu verbinden und zumindest im Wesentlichen spielfrei an der Leistungsplatine zu fixieren. Unter einem "Kontaktfederelement" soll insbesondere ein Bauteil verstanden werden, welches dazu vorgesehen ist, bei einer Einwirkung durch eine Kraft, insbesondere durch das Verbinden des Bolzenelements mit dem Klemmelement, gegen eine Federkraft, insbesondere beim Übergang in einen montierten Zustand der Steckverbindungseinheit, einen, insbesondere elektrisch leitenden, Kontakt zu einem anderen Bauteil, insbesondere der Leistungsplatine, herzustellen. Vorzugsweise umfasst das Kontaktfederelement zumindest einen Federfortsatz, der dazu vorgesehen ist, das Bolzenelement in einem montierten Zustand mit einer Haltekraft zu beaufschlagen und/oder das Bolzenelement elektrisch leitend zu kontaktieren. Insbesondere ist das Klemmelement zumindest teilweise als Kontaktfederelement mit zumindest mehr als einem Federfortsatz ausgebildet. Insbesondere ist das Klemmelement in einem vormontierten Zustand der Steckverbindungseinheit über eine spielbehaftete Verbindung an der Leistungsplatine zumindest fixiert. Vorzugsweise durchdringt das Bolzenelement beim Ineinandergreifen das Klemmelement zumindest teilweise und presst den Federfortsatz/die Federfortsätze an eine Innenwand der Aussparung der Leistungsplatine und/oder einen Bereich einer Fläche der Leistungsplatine. Durch die erfindungsgemäße Ausgestaltung des Durchlauferhitzers kann ein Durchlauferhitzer mit einer vorteilhaft fehlerfreien und kurzen Montage ermöglicht werden. Außerdem kann eine vorteilhaft einfache Montage und/oder Wartung des Durchlauferhitzers erreicht werden. Zudem kann ein Durchlauferhitzer mit einer vorteilhaft erhöhten Stabilität und Sicherheit erreicht werden. Außerdem kann durch die erfindungsgemäße Ausgestaltung des Durchlauferhitzers auch eine vorteilhaft geringe Anzahl an Steckverbindungseinheiten erreicht werden, welche für eine sichere Verbindung der Leistungsplatine mit der Heizeinheit erforderlich sind. Insbesondere können dadurch auch vorteilhaft geringe Kosten des Durchlauferhitzers erreicht werden.

Zudem wird vorgeschlagen, dass die Steckverbindungseinheit zumindest im Wesentlichen vollständig aus einem elektrisch leitenden, insbesondere metallischen, Material ausgebildet ist. Insbesondere ist die Steckverbindungseinheit vollständig aus einem elektrisch leitenden, insbesondere metallischen, Material ausgebildet. Es ist jedoch auch denkbar, dass zumindest ein Teil der Steckverbindungseinheit aus einem nicht-elektrisch leitenden Material ausgebildet ist. Vorteilhafterweise ist die Steckverbindungseinheit zumindest im Bereich von Kontaktflächen zwischen dem Bolzenelement und dem Klemmelement aus einem elektrisch leitenden, insbesondere metallischen, Material ausgebildet. Insbesondere ist die Steckverbindungseinheit, insbesondere das Bolzenelement und/oder das Klemmelement, insbesondere zumindest im Wesentlichen vollständig, aus Silber, Kupfer, Aluminium, Eisen, Gold, Zink, Wolfram und/oder einem anderen, einem Fachmann bekannten, elektrisch leitendem Material ausgebildet. Durch die erfindungsgemäße Ausgestaltung des Durchlauferhitzers kann ein Durchlauferhitzer mit einer Steckverbindungseinheit zum elektrisch leitenden Verbinden der Leistungsplatine und der Heizeinheit realisiert werden.

Des Weiteren wird vorgeschlagen, dass der Durchlauferhitzer zumindest mehr als zwei Steckverbindungseinheiten umfasst, über die die Leistungsplatine und die Heizeinheit elektrisch leitend miteinander verbunden sind. Insbesondere sind die Leistungsplatine und die Heizeinheit über genau sechs Steckverbindungseinheiten verbunden. Es ist jedoch auch denkbar, dass die Leistungsplatine und die Heizeinheit über eine von zwei oder sechs abweichende Anzahl von Steckverbindungseinheiten verbunden sind. Insbesondere ist die Anzahl der Steckverbindungseinheiten, welche die Leistungsplatine und die Heizeinheit verbinden, abhängig von der maximal aufzuwendenden Heizleistung des Durchlauferhitzers. Bevorzugt sind die Steckverbindungseinheiten auf einer Fläche der Leistungsplatine derart angeordnet, dass die Leistungsplatine mit der Heizeinheit zumindest im Wesentlichen spielfrei verbunden ist. Durch die erfindungsgemäße Ausgestaltung des Durchlauferhitzers kann ein Durchlauferhitzer mit einer vorteilhaft erhöhten Stabilität und Sicherheit erreicht werden. Außerdem kann dadurch eine vorteilhaft hohe Heizleistung zur Umsetzung in der Heizeinheit des Durchlauferhitzers erreicht werden.

Zudem wird ein Verfahren zur Montage eines erfindungsgemäßen Durchlauferhitzers, wobei in zumindest einem Verfahrensschritt eine Leistungsplatine mittels einer Steckverbindungseinheit mit einer Heizeinheit elektrisch leitend verbunden wird. Bevorzugt umfasst das Verfahren zumindest einen Verfahrensschritt, in dem die Leistungsplatine des Durchlauferhitzers mit zumindest einem Klemmelement der Steckverbindungseinheit bestückt wird, wobei das Klemmelement zumindest über eine zumindest spielbehaftete Verbindung mit der Leistungsplatine verbunden wird. Bevorzugt wird in zumindest einem Verfahrensschritt des Verfahrens zumindest ein Bolzenelement der Steckverbindungseinheit an der Heizeinheit des Durchlauferhitzers ausgeformt und/oder befestigt, insbesondere um das Bolzenelement und die Heizeinheit einstückig auszubilden. Insbesondere wird in zumindest einem Verfahrensschritt des Verfahrens das Bolzenelement mit dem Klemmelement, insbesondere kraft- und/oder formschlüssig, verbunden, um die Leistungsplatine und die Heizeinheit elektrisch leitend zu verbinden. Bevorzugt wird in zumindest einem Verfahrensschritt des Verfahrens das Klemmelement durch ein Ineinandergreifen des Bolzenelements in das Klemmelement, die Steckverbindungseinheit an der Leistungsplatine zumindest im Wesentlichen spielfrei fixiert. Insbesondere wird in zumindest einem Verfahrensschritt des Verfahrens die Leistungsplatine durch ein Aufstecken des Klemmelements auf das Bolzenelement auf die Heizeinheit aufgebracht und mit dieser über die Steckverbindungseinheit verbunden. Durch die erfindungsgemäße Ausgestaltung des Verfahrens zur Montage eines Durchlauferhitzers kann eine vorteilhaft fehlerfreie und kurze Montage des Durchlauferhitzers bei gleichzeitig unveränderter Stabilität und Haltbarkeit realisiert werden. Außerdem kann eine vorteilhaft hohe Modularität, insbesondere auch mit externen ähnlichen Geräten, und insbesondere bei einer Reparatur und/oder Wartung, erreicht werden. Durch die erfindungsgemäße Ausgestaltung des Verfahrens kann auch eine vorteilhaft einfache Montage und/oder Wartung ermöglicht werden.

Der erfindungsgemäße Durchlauferhitzer und/oder das erfindungsgemäße Verfahren sollen/soll hierbei nicht auf die oben beschriebene Anwendung und Ausführungsform beschränkt sein. Insbesondere können/kann der erfindungsgemäße Durchlauferhitzer und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Darstellung eines Haushalts- und/oder Warmwassergeräts mit einem erfindungsgemäßen Durchlauferhitzer,
- Fig. 2: eine schematische Darstellung eines erfindungsgemäßen Durchlauferhitzers,
- Fig. 3: eine schematische Darstellung einer Steckverbindungseinheit eines erfindungsgemäßen Durchlauferhitzers in einem vormontierten Zustand in einer Seitenansicht,
- Fig. 4: eine schematische Darstellung einer Steckverbindungseinheit eines erfindungsgemäßen Durchlauferhitzers in einem montierten Zustand in einer Seitenansicht und
- Fig. 5: eine schematische Darstellung eines Ablaufs eines Verfahrens zur Montage und Betrieb eines erfindungsgemäßen Durchlauferhitzers.

### Beschreibung des Ausführungsbeispiels

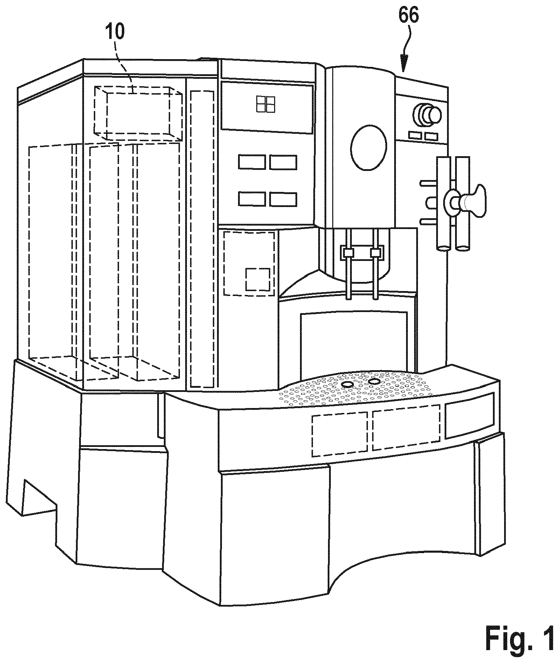

Figur 1 zeigt eine schematische Darstellung eines Haushalts- und/oder Warmwassergeräts 66 mit einem Durchlauferhitzer 10. Der Durchlauferhitzer 10 ist dazu vorgesehen, ein den Durchlauferhitzer 10 durchlaufendes Medium mittels einer Heizeinheit zu erhitzen. Das Haushalts- und/oder Warmwassergerät 66 ist als eine Kaffeemaschine ausgebildet. Es ist jedoch denkbar, dass der Durchlauferhitzer 10 in jedem anderen, einem Fachmann bekannten Haushalts- und/oder Warmwassergerät zum Erhitzen eines Mediums verwendet wird.

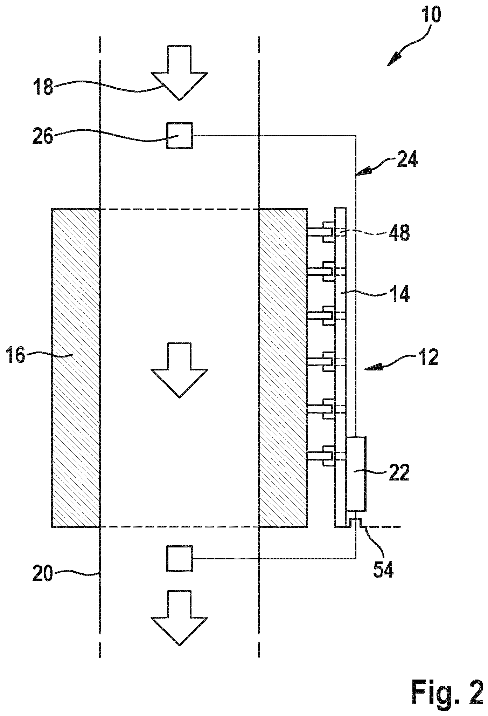

In Figur 2 ist eine schematische Darstellung eines Durchlauferhitzers 10 gezeigt. Der Durchlauferhitzer 10 umfasst eine Leistungsplatine 14 zur Regelung und Bereitstellung einer Heizleistung und eine Heizeinheit 16 zum Erhitzen eines, den Durchlauferhitzer 10 durchlaufenden Mediums 18. Die Heizeinheit 16 des Durchlauferhitzers 10 umschließt zumindest teilweise den vom Medium 18 durchlaufenen Mediumleitkanal 20 und weist zumindest eine Heizwendel auf, die in Figur 1 jedoch nicht gezeigt ist. Die in Figur 1 gezeigte Ausführung des Durchlauferhitzers 10, ist bezüglich der Anordnung des vom Medium 18 durchlaufenen Mediumleitkanals 20 als eine elementare Ausführung zu sehen. Grundsätzlich sind alle einem Fachmann bekannten Anordnungen der Heizeinheit 16, insbesondere der Heizwendeln, und des vom Medium 18 durchlaufenen Mediumleitkanal 20 denkbar. Vorteilhafterweise ist der vom Medium 18 durchlaufene Mediumleitkanal 20 derart in der Heizeinheit 16 angeordnet, dass ein Wirkungsbereich zwischen Heizwendeln und Mediumleitkanal 20 zum Erhitzen des Mediums 18 maximiert ist. Die Leistungsplatine 14 umfasst eine Steuerelektronik 22 zur Steuerung und/oder Regelung der Heizleistung. Es ist jedoch auch denkbar, dass die Steuerelektronik 22, insbesondere auf einer weiteren Platine, getrennt von der Leistungsplatine 14 ausgebildet ist. Die Leistungsplatine 14 ist zumindest im Wesentlichen vollflächig an der Heizeinheit 16 angeordnet.

Der Durchlauferhitzer 10 weist insbesondere sechs Steckverbindungseinheiten 12 auf, die dazu vorgesehen sind, die Leistungsplatine 14 mit der Heizeinheit 16 elektrisch leitend zu verbinden. Es ist jedoch auch denkbar, dass der Durchlauferhitzer 10 eine von sechs abweichende Anzahl von Steckverbindungseinheiten 12 aufweist, die dazu vorgesehen sind, die Leistungsplatine 14 mit der Heizeinheit 16 elektrisch leitend zu verbinden. Die Leistungsplatine 14 ist über eine Verbindung 54 mit einer externen Quelle, insbesondere einem elektrischen Anschluss und/oder einem Akku, verbunden und dazu vorgesehen, dieser eine Spannung zu entnehmen und in eine Heizleistung umzuwandeln. Die Leistungsplatine 14 weist insbesondere vier Aussparungen 48 auf, welche in Figur 1 nur angedeutet dargestellt sind und für eine Verbindung der Leistungsplatine 14 mit den Steckverbindungseinheiten 12 vorgesehen sind. Bevorzugt weist die Leistungsplatine 14 eine entsprechend einer Anzahl an Steckverbindungseinheiten 12 ausgebildete Anzahl an Aussparungen 48 auf.

Der Durchlauferhitzer 10 weist eine Sensoreinheit 24 auf, welche dazu vorgesehen ist, eine Kenngröße, insbesondere eine Temperatur und/oder einen Volumenstrom eines den Durchlauferhitzer 10 durchlaufenden Mediums 18 zu messen. Insbesondere erfolgt eine Steuerung der Heizleistung mittels der Steuerelektronik 22 in Abhängigkeit von der mittels der Sensoreinheit 24 gemessenen Kenngröße, insbesondere einer Temperatur und/oder eines Volumenstroms. Die Sensoreinheit 24 des Durchlauferhitzers 10 weist vorzugsweise zwei Sensorelemente 26 auf, welche in einem vom Medium 18 durchlaufenen Mediumleitkanal 20 in Durchlaufrichtung jeweils vor und nach der Heizeinheit 16 angeordnet sind. Die Sensoreinheit 24 ist mit der Steuerelektronik 22 kabelgebunden und/oder kabellos verbunden.

Die Steckverbindungseinheit 12 umfasst ein Bolzenelement 28 und ein Klemmelement 30, welche dazu vorgesehen sind, zu einer Verbindung der Leistungsplatine 14 mit der Heizeinheit 16 über die Steckverbindungseinheit 12 zumindest im Wesentlichen ineinanderzugreifen. Das Klemmelement 30 der Steckverbindungseinheit 12 ist zumindest im Wesentlichen vollflächig an einer Unterseite 32 der Leistungsplatine 14 angeordnet. Insbesondere ist die Unterseite 32 der Leistungsplatine 14 in Richtung der Heizeinheit 16 ausgerichtet, wobei die Unterseite 32 über die Steckverbindungseinheiten 12 mit der Heizeinheit 16 verbunden ist. Das Bolzenelement 28 ist einstückig mit der Heizeinheit 16 ausgebildet. Bevorzugt sind das Bolzenelement 28 und die Heizeinheit 16 zumindest im Wesentlichen vollständig aus einem elektrisch leitenden, insbesondere metallischen, Material ausgebildet. Die Steckverbindungseinheit 12 weist einen vormontierten Zustand und einen montierten Zustand auf, wobei in einem vormontierten Zustand das Bolzenelement 28 und das Klemmelement 30 getrennt, insbesondere kontaktfrei, angeordnet sind und in einem montierten Zustand das Bolzenelement 28 und das Klemmelement 30 ineinandergreifend verbunden sind und zusammen zumindest teilweise auf der Leistungsplatine 14 angeordnet sind. Die Steckverbindungseinheit 12 ist in Figur 2 in einem montierten Zustand gezeigt. Die Steckverbindungseinheit 12 ist zumindest im Wesentlichen vollständig aus einem elektrisch leitenden, insbesondere metallischen, Material ausgebildet.

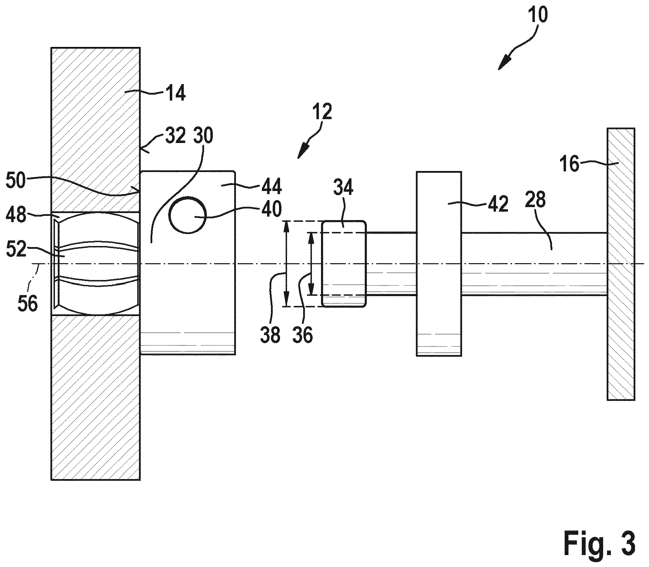

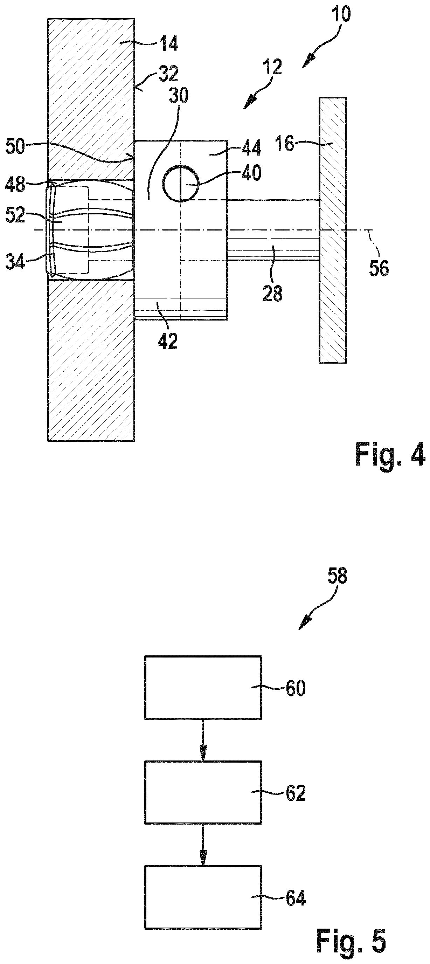

Die Figuren 3 und 4 zeigen jeweils eine schematische Darstellung der Steckverbindungseinheit 12 des Durchlauferhitzers 10 in einer Seitenansicht. Figur 3 zeigt die Steckverbindungseinheit 12 des Durchlauferhitzers 10 in einem vormontierten Zustand. Figur 4 zeigt die Steckverbindungseinheit 12 des Durchlauferhitzers 10 in einem montierten Zustand.

Die Steckverbindungseinheit 12 umfasst das Bolzenelement 28 und das Klemmelement 30, welche dazu vorgesehen sind, zu einer Verbindung der Leistungsplatine 14 mit der Heizeinheit 16 über die Steckverbindungseinheit 12 zumindest im Wesentlichen ineinanderzugreifen. Das Bolzenelement 28 ist zumindest im Wesentlichen rotationssymmetrisch zu einer Mittelachse 56 des Bolzenelements 28 ausgebildet. Das Klemmelement 30 ist zumindest im Wesentlichen rotationssymmetrisch zu einer Mittelachse 56 des Klemmelements 30 ausgebildet. Vorzugsweise verlaufen die Mittelachsen 56 des Bolzenelements 28 und die Mittelachse 56 des Klemmelements 30 in einem montierten Zustand der Steckverbindungseinheit 12 koaxial. Die Mittelachsen 56 des Bolzenelements 28 und des Klemmelements 30 sind in den Figuren 3 und 4 als eine Achse dargestellt. Es ist jedoch auch denkbar, dass, insbesondere in einem vormontierten Zustand der Steckverbindungseinheit 12, die Mittelachsen 56 des Bolzenelements 28 und des Klemmelements 30 unterschiedlich ausgerichtet sind. Die Verbindung des Bolzenelements 28 und des Klemmelements 30 im montierten Zustand der Steckverbindungseinheit 12 ist vorzugsweise als kraft- und/oder formschlüssige Verbindung ausgebildet. Das Klemmelement 30 der Steckverbindungseinheit 12 umschließt das Bolzenelement 28 in einem montierten Zustand der Steckverbindungseinheit 12 zumindest größtenteils. Das Klemmelement 30 der Steckverbindungseinheit 12 ist zumindest im Wesentlichen vollständig an einer Unterseite 32 der Leistungsplatine 14 angeordnet. Das Bolzenelement 28 ist einstückig mit der Heizeinheit 16 ausgebildet. Insbesondere ist das Bolzenelement 28 an einem der Heizeinheit 16 zugewandten Ende entlang der Mittelachse 56 des Bolzenelements 28 einstückig mit der Heizeinheit 16 ausgebildet. Das Bolzenelement 28 weist an einem, insbesondere von der Heizeinheit 16 abgewandten, Ende zumindest einen Klemmbereich 34 auf, der dazu vorgesehen ist, bei einem Ineinandergreifen das Bolzenelement 28 und das Klemmelement 30 miteinander zu verklemmen. Der Klemmbereich 34 des Bolzenelements 28 weist im Vergleich zu einem radialen Durchmesser 36 des Bolzenelements 28 außerhalb des Klemmbereichs 34 einen größeren radialen Durchmesser 38 auf. Der Klemmbereich 34 weist eine Kontaktfläche auf, welche für die Verbindung zwischen dem Bolzenelement 28 und dem Klemmelement 30 mit einer Kraft beaufschlagt wird. In dem vormontierten Zustand ist das Klemmelement 30 zumindest spielbehaftet mit der Leistungsplatine 14 verbunden. Bevorzugt weist der Klemmbereich 34 zumindest eine Kontaktfläche auf, welche für die Verbindung zwischen dem Bolzenelement 28 und dem Klemmelement 30 mit einer Kraft beaufschlagt wird. Insbesondere weist die Leistungsplatine 14 zumindest eine Aussparung 48 auf, die für eine Verbindung mit der Steckverbindungseinheit 12 vorgesehen ist. Die Leistungsplatine 14 weist an einem die Aussparung 48 begrenzenden Randbereich der Leistungsplatine 14 zumindest eine Kontaktfläche 50 auf, die dazu vorgesehen ist, die Steckverbindungseinheit 12 elektrisch zu kontaktieren, insbesondere um eine Heizleistung an die Steckverbindungseinheit 12 zu übertragen.

Das Klemmelement 30 der Steckverbindungseinheit 12 weist eine Öffnung 40 auf, welche derart ausgebildet ist, dass eine Krafteinwirkung eines Benutzers und/oder einer externen Einheit durch die Öffnung 40 in einem vormontierten und/oder montierten Zustand der Steckverbindungseinheit 12 ein Lösen des Klemmelements 28 von der Leistungsplatine 14 und/oder aus einem montierten Zustand der Steckverbindungseinheit 12 heraus ein Lösen des Bolzenelements 28 und des Klemmelements 30 voneinander ermöglicht. Die Öffnung 40 des Klemmelements 30 ist als ein zumindest im Wesentlichen runder Ausschnitt im Klemmelement 30 ausgebildet, insbesondere in einem Bereich des Klemmelements 30, der in einem montierten Zustand der Steckverbindungseinheit 12 zumindest außerhalb der Leistungsplatine 14 angeordnet ist.

Das Klemmelement 30 ist zumindest teilweise als Kontaktfederelement ausgebildet, welches dazu vorgesehen ist, in einem vormontierten Zustand der Steckverbindungseinheit 12 das Klemmelement 30 zumindest spielbehaftet mit der Leistungsplatine 14 zu verbinden und in einem montierten Zustand der Steckverbindungseinheit 12 die Steckverbindungseinheit 12 mit der Leistungsplatine 14 zumindest teilweise elektrisch leitend zu verbinden und zumindest im Wesentlichen spielfrei an der Leistungsplatine 14 zu fixieren. Insbesondere ist das Klemmelement 30 in einem vormontierten Zustand der Steckverbindungseinheit 12 über eine spielbehaftete Verbindung an der Leistungsplatine 14 fixiert. Das Klemmelement 30 weist vorzugsweise mehrere Federfortsätze 52 auf. Vorzugsweise durchdringt das Bolzenelement 28 beim Ineinandergreifen das Klemmelement 30 und presst die Federfortsätze 52 an die Kontaktflächen 50 der Leistungsplatine 14.

Das Bolzenelement 28 weist einen Auflagebereich 42 auf, der scheibenförmig ausgebildet ist und beim Ineinandergreifen des Bolzenelements 28 und des Klemmelements 30 auf einer Fläche des Klemmelements 30 aufliegt, die zumindest im Wesentlichen senkrecht zur Mittelachse 56 des Bolzenelements 28 ausgerichtet ist. Es ist jedoch auch denkbar, dass der Auflagebereich 42 zumindest im Wesentlichen teller- oder untertassenförmig ausgebildet ist. Insbesondere ist aber auch jede andere, einem Fachmann bekannte Form denkbar, die an dem Klemmelement 30 und/oder der Leistungsplatine 14 aufliegt. Der Auflagebereich 42 weist im Vergleich zu weiteren Bereichen des Bolzenelements 28, die außerhalb des Auflagebereichs 42 am Bolzenelement 28 angeordnet sind, einen größeren radialen Durchmesser auf. Das Klemmelement 30 weist eine zum Auflagebereich 42 korrespondierend ausgebildete Anlagefläche 44 auf. Insbesondere sind das Bolzenelement 28 und das Klemmelement 30 bei einem Übergang in einen montierten Zustand über den Auflagebereich 42 des Bolzenelements 28 und die Anlagefläche 44 des Klemmelements 30 kraft- und/oder formschlüssig miteinander verbunden. Vorteilhafterweise ist die Öffnung 40 des Klemmelements 30 in einem Bereich der Anlagefläche 44 ausgebildet. Bevorzugt ist der Auflagebereich 42 des Bolzenelements 28 dazu vorgesehen, bei einem Trennen der Steckverbindungseinheit 12 aus einem montierten Zustand mittels einer Beaufschlagung einer Kraft durch einen Benutzer und/oder eine externe Einheit auf den Auflagebereich 42, insbesondere durch die Öffnung 40 des Klemmelements 30, das Bolzenelement 28 und das Klemmelement 30 voneinander zu lösen.

Die Steckverbindungseinheit 12 ist zumindest im Wesentlichen vollständig aus einem elektrisch leitenden, insbesondere metallischen, Material ausgebildet. Insbesondere ist die Steckverbindungseinheit 12, insbesondere das Bolzenelement 28 und/oder das Klemmelement 30, zumindest im Wesentlichen vollständig aus Silber, Kupfer, Aluminium, Eisen, Gold, Zink, Wolfram und/oder einem anderen, einem Fachmann bekannten, elektrisch leitendem Material ausgebildet.

Figur 5 zeigt einen Ablauf eines Verfahrens 58 zur Montage des Durchlauferhitzers 10, wobei in zumindest einem Verfahrensschritt 62 die Leistungsplatine 14 mittels der Steckverbindungseinheit 12 mit der Heizeinheit 16 verbunden wird. Das Verfahren 58 umfasst zumindest einen Verfahrensschritt 60, in dem die Leistungsplatine 14 des Durchlauferhitzers 10 mit zumindest dem Klemmelement 30 der Steckverbindungseinheit 12 bestückt wird, wobei das Klemmelement 30 zumindest über eine spielbehaftete Verbindung mit der Leistungsplatine 14 verbunden ist. In zumindest einem Verfahrensschritt 62 des Verfahrens 58 wird zumindest das Bolzenelement 28 der Steckverbindungseinheit 12 an der Heizeinheit 16 des Durchlauferhitzers 10 ausgeformt und/oder befestigt, um die Heizeinheit 16 einstückig mit dem Bolzenelement 28 auszubilden. Das Verfahren 58 umfasst zumindest einen Verfahrensschritt 64, in dem das Bolzenelement 28 mit dem Klemmelement 30, insbesondere kraft- und/oder formschlüssig, verbunden wird, um die Leistungsplatine 14 und die Heizeinheit 16 elektrisch leitend zu verbinden. Insbesondere wird in zumindest einem Verfahrensschritt, insbesondere dem Verfahrensschritt 64, die Leistungsplatine 14 durch ein Aufstecken des Klemmelements 30 auf das Bolzenelement 28 auf die Heizeinheit 16 aufgebracht und mit dieser über die Steckverbindungseinheit 12 verbunden. Bevorzugt wird in zumindest einem Verfahrensschritt, insbesondere dem Verfahrensschritt 64, das Klemmelement 30 durch ein Ineinandergreifen des Bolzenelements 28 in das Klemmelement 30, das Bolzenelement 28 und das Klemmelement 30 an der Leistungsplatine 14 zumindest im Wesentlichen spielfrei fixiert.

## Patentansprüche

1. Durchlauferhitzer, insbesondere Haushaltsgerätedurchlauferhitzer, mit zumindest einer Leistungsplatine (14) zur Regelung und Bereitstellung einer Heizleistung und mit zumindest einer Heizeinheit (16) zum Erhitzen eines, den Durchlauferhitzer (10) durchlaufenden Mediums (18), **gekennzeichnet durch** zumindest eine Steckverbindungseinheit (12), die dazu vorgesehen ist, die Leistungsplatine (14) mit der Heizeinheit (16) elektrisch leitend zu verbinden.

2. Durchlauferhitzer nach Anspruch 1, **dadurch gekennzeichnet, dass** die Steckverbindungseinheit (12) zumindest ein Bolzenelement (28) und zumindest ein Klemmelement (30) umfasst, welche dazu vorgesehen sind, zu einer Verbindung der Leistungsplatine (14) mit der Heizeinheit (16) über die Steckverbindungseinheit (12) zumindest im Wesentlichen ineinanderzugreifen.

3. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei das Klemmelement (30) der Steckverbindungseinheit (12) zumindest im Wesentlichen vollständig an einer Unterseite (32) der Leistungsplatine (14) angeordnet ist.

4. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei das Bolzenelement (28) zumindest teilweise einstückig mit der Heizeinheit (16) ausgebildet ist.

5. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei das Bolzenelement (28) an einem Ende zumindest einen Klemmbereich (34) aufweist, der dazu vorgesehen ist, bei einem Ineinandergreifen des Bolzenelements (28) in das Klemmelement (30), das Bolzenelement (28) und das Klemmelement (30) miteinander zu verklemmen.

6. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei in einem vormontierten Zustand der Steckverbindungseinheit (12) das Bolzenelement (28) und das Klemmelement (30) getrennt angeordnet sind und in einem montierten Zustand der Steckverbindungseinheit (12) das Bolzenelement (28) und das Klemmelement (30) ineinandergreifend verbunden sind und zusammen zumindest teilweise auf der Leistungsplatine (14) angeordnet sind.

7. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei in einem vormontierten Zustand der Steckverbindungseinheit (12) das Klemmelement (30) zumindest spielbehaftet mit der Leistungsplatine (14) verbunden ist.

8. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei das Klemmelement (30) zumindest eine Öffnung (40) aufweist, wobei die Öffnung (40) derart ausgebildet ist, dass eine Krafteinwirkung eines Benutzers und/oder einer externen Einheit durch die Öffnung (40) in einem vormontierten und/oder montierten Zustand der Steckverbindungseinheit (12) ein Lösen des Klemmelements (30) von der Leistungsplatine (14) und/oder aus einem montierten Zustand der Steckverbindungseinheit (12) heraus ein Lösen des Bolzenelements (28) und des Klemmelements (30) voneinander ermöglicht.

9. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei das Bolzenelement (28) zumindest einen Auflagebereich (42) aufweist, der teller- oder scheibenförmig ausgebildet ist.

10. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei das Klemmelement (30) das Bolzenelement (28) in einem montierten Zustand der Steckverbindungseinheit (12) zumindest größtenteils umschließt.

11. Durchlauferhitzer nach einem der vorhergehenden Ansprüche, **dadurch gekennzeichnet, dass** die Steckverbindungseinheit (12) zumindest ein Bolzenelement (28) und zumindest ein Klemmelement (30) umfasst, wobei das Klemmelement (30) zumindest teilweise als Kontaktfederelement ausgebildet ist, welches in einem vormontierten Zustand der Steckverbindungseinheit (12) zumindest spielbehaftet mit der Leistungsplatine (14) verbunden ist.

12. Durchlauferhitzer nach einem der vorhergehenden Ansprüche, **dadurch gekennzeichnet, dass** die Steckverbindungseinheit (12) zumindest im Wesentlichen vollständig aus einem elektrisch leitenden, insbesondere metallischen, Material ausgebildet ist.

13. Durchlauferhitzer nach einem der vorhergehenden Ansprüche, **gekennzeichnet durch** zumindest mehr als zwei Steckverbindungseinheiten (12), über die die Leistungsplatine (14) und die Heizeinheit (16) elektrisch leitend miteinander verbunden sind.

14. Verfahren zur Montage eines Durchlauferhitzers, insbesondere eines Haushaltsgerätedurchlauferhitzers, nach einem der vorhergehenden Ansprüche, **dadurch gekennzeichnet, dass** in zumindest einem Verfahrensschritt (60, 62, 64) eine Leistungsplatine (14) mittels einer Steckverbindungseinheit (12) mit einer Heizeinheit (16) elektrisch leitend verbunden wird.
